# EUROPÄISCHE PATENTSCHRIFT

(11) **EP 0 822 366 B1**
(45) Veröffentlichungstag und Bekanntmachung des Hinweises auf die Patenterteilung: **10.01.2001**
(21) Anmeldenummer: 97111161.2
(22) Anmeldetag: 03.07.1997
(51) Int. Cl.: F16L 27/11

(54) **Rohrgelenk**
Articulated pipe joint
Raccord articulé de tuyaux

(30) Priorität: 31.07.1996 DE 19630886
(43) Veröffentlichungstag der Anmeldung: 04.02.1998
(73) Patentinhaber: Witzenmann GmbH Metallschlauch-Fabrik Pforzheim, 75175 Pforzheim (DE)
(72) Erfinder: Berger, Peter W., 75181 Pforzheim-Eutingen (DE); Uber, Roland, 75177 Pforzheim (DE)
(74) Vertreter: Lemcke, Rupert, Dipl.-Ing.

(56) Entgegenhaltungen:
- DE-A- 2 703 064
- DE-A- 4 328 858

## Beschreibung

Die Erfindung betrifft ein Rohrgelenk, insbesondere für eine Kraftstoffleitung von Dieselmotoren.

Es ist bekannt, bei Großdieselmotoren die unter hohem Druck stehenden Förderleitungen für den Dieselkraftstoff durch zwischengesetzte Gummi- oder Teflonschläuche beweglich zu machen, damit die von einem ortsfesten Anschluß ausgehenden Kraftstoffleitungen die Bewegungen des elastisch gelagerten Dieselmotors über einen solchen allseits beweglichen Abschnitt aufnehmen können. Die Bewegungen des Dieselmotors ergeben sich aus Beschleunigungsvorgängen. Bei Schiffsdieseln kommen hier noch aus dem Seegang resultierende Bewegungen hinzu.

Die Belastung der Kraftstoffleitung besteht jedoch nicht nur in dem hohen Druck, unter dem der Kraftstoff zu stehen hat, sondern vor allem auch in hohen Druckschwankungen, die sich mit entsprechender Frequenz aus den Füllvorgängen für die einzelnen Zylinder des Dieselmotors ergeben.

Insbesondere diesen Druckpulsationen halten die in der Regel bogenförmig verlegten Gummi- oder Teflonschläuche nicht lange Stand, so daß hier ein häufiger Reparaturbedarf austritt. Außerdem sind solche Schläuche nicht beständig gegen hohe Temperaturen bzw. Feuer, woraus sich eine zusätzliche Gefahr durch auslaufenden Dieselkraftstoff zum Beispiel im Brandfalle ergibt.

Durch die DE 43 28 858 A1 ist zur Verbindung zweier Leitungsteile ein einzelnes Kardangelenk bekannt, bei dem die unmittelbar durch einen Metallbalg dicht miteinander verbundenen Leitungsteile mit ihnen verbundene rohrförmige Hülsen aufweisen, deren aufeinander zu gerichtete, als Klauen ausgebildeten Enden durch Gelenkbolzen mit einem Kardanring schwenkbar verbunden sind. Ein solches einzelnes Gelenk ist jedoch als Rohrgelenk bei Kraftstoffleitungen von Dieselmotoren nicht geeignet, da es nur eine Schwenkbewegung zwischen den Leitungsteilen zulässt, nicht jedoch auch gegenseitige Axial- und Lateralbewegungen.

Im gleichen Sinne kann auch der Gegenstand nach der DE 27 03 064 A1 keine Problemlösung bringen, obwohl hier zusätzlich zu einem Kardangelenk der vorgenannten Art noch ein Einfachgelenk im Leitungsstrang vorgesehen ist, das jedoch zusätzlich nur eine wärmedehnungsbedingte Längenänderung des Leitungsabschnittes zulassen soll, um dann nach erreichen der Betriebstemperatur praktisch nur noch eine Schwenkbewegung zuzulassen.

Aufgabe der Erfindung ist es daher, die bekannten Schläuche durch ein hohem Druck, insbesondere pulsierenden Druckbelastungen dauernd standhaltendes, andererseits auch feuerfestes Bauteil zu ersetzen, das zusätzlich hinsichtlich seiner Beweglichkeit alle durch die Schläuche gegebenen Freiheitsgrade aufweist, bei geringer Masse leicht beweglich ist und im Hinblick auf seine Anbringung nahe dem Dieselmotor nur einen geringeren Platzbedarf hat.

Diese Aufgabe ist erfindungsgemäß gelöst durch ein Rohrgelenk, insbesondere für ein bewegliches Teilstück aus Metall einer Kraftstoffleitung für Großdieselmotoren mit einem von einer ortsfesten Anschlussverbindung ausgehenden Leitungsabschnitt und einem daran anschließenden, bis zu einer Verbindung am Motor weiterführenden Leitungsabschnitt, wobei einer der Leitungsabschnitte zwei mit axialem Abstand zueinander angeordnete Rohrgelenke in Form von Kardangelenken mit Klauen und der andere Leitungsabschnitt mit dazu im wesentlichen querliegender Achse ein Rohrgelenk in Form eines Einfachgelenkes mit Klauen aufweist, dessen Gelenkachse im wesentlichen quer zu den Achsen beider Leitungsabschnitte angeordnet ist, wobei ferner innerhalb der Rohrgelenke die Leitungsteile jeweils durch einen Metallbalg dicht miteinander verbunden sind, und wobei die Klauen der Rohrgelenke jeweils radial außerhalb des Balges durch mit den Leitungsteilen verbundene, rohrförmige Hülsen gebildet sind, deren aufeinander zu gerichtete Enden durch die Gelenkbolzen mit einem Kardarnring bzw. beim Einfachgelenk miteinander schwenkbar verbunden sind.

Durch diese erfindungsgemäße Anordnung ist zunächst einmal sichergestellt, daß das Teilstück der Kraftstoffleitung hinsichtlich seiner Beweglichkeit sämtliche Freiheitsgrade aufweist, die für eine allseitige Bewegung zwischen dem ortsfesten und dem motorseitigen Anschluß des Teilstückes erforderlich sind.

Da andererseits das bewegliche Teilstück mit allen seinen Bestandteilen aus Metall besteht, ist es nicht nur feuerfest, sondern kann vor allem auch die erwähnten hohen Drücke, insbesonderen pulsierenden Drücke aushalten. Denn diesen Belastungen sind nur hochbelastbare Leitungsteile in Form von Rohren und andererseits Metallbälgen ausgesetzt, welch letztere sich als flexibles Bauteil entsprechend dem auftretenden Belastungsprofil dimensionieren lassen.

Durch die Verwendung der genannten Metallrohre und -bälge ergibt sich außerdem grundsätzlich nur ein Platzbedarf, der demjenigen der bekannten Schläuche entspricht.

Was dabei jedoch die Gestaltung der Rohrgelenke betrifft, so bilden die dazu verwendeten rohrförmigen Hülsen ebenfalls schlanke und damit radial wenig ausladende Teile, mit deren Gestaltung sich außerdem der Vorzug verbindet, daß sie die jeweils in ihnen enthaltenen Bälge vollkommen umfangen und damit gegen äußere Einflüsse, insbesondere Verschmutzung und Beschädigung schützen.

Insgesamt ist also durch die Erfindung ein bewegliches Teilstück einer Kraftstoffleitung geschaffen, das sich hinsichtlich Beweglichkeit und Platzbedarf ohne weiteres an die Stelle der bisher verwendeten Schläuche setzen läßt, andererseits aber eine hohe Standzeit gegenüber den auftretenden Belastungen hat und der Gefahr einer Beschädigung durch Feuer nicht unterliegt. Dabei ergibt sich für das Teilstück wegen der wenigen und einfachen bei ihm verwendeten Bauteile nur eine geringe Masse, und es ist die gesamte Konstruktion gerade auch bei den Gelenken nach außen hin glatt und abgeschlossen, so daß eine besondere Gefahr von Verletzungen nicht besteht.

Hierbei verläuft der von der ortsfesten Anschlußverbindung ausgehende Leitungsabschnitt vorzugsweise im wesentlichen senkrecht oder quer zur Motorachse und geht beispielsweise über einen Krümmer rechtwinklig in den mit dem Motor verbundenen anderen Leitungsabschnitt über.

Zweckmäßig ist es, daß der Innendurchmesser des jeweiligen Balges der Gelenke im wesentlichen dem Innendurchmesser der angrenzenden Leitungsteile entspricht, daß die zylindrischen Anschlußenden des Balges innerhalb des Bereichs seiner Wellenhöhe nach radial außen seite der Leitungsteile mit diesen verbunden sind. Dadurch ergibt sich für die Balgverbindung der Leitungsteile eine besonders schlanke, das heißt radial wenig ausladende Form, wobei, wenn zum Beispiel die Balganschlußenden und die Leitungsteile durch eine außenliegende Überlappnaht miteinander verschweißt sind, auch dadurch radial ohne weiteres vorhandener Bauraum genutzt wird und die nur auf der Rohraußenseite verlaufenden Schweißnähte verhindern, daß Schweißgut in die Rohrleitung gelangt und dort Beschädigungen verursacht.

Vorteilhaft ist es, den Balg ringgewellt auszubilden, wozu zur Herstellung einer hohen Flexibilität die Verwendung eines mehrlagigen Balges zweckmäßig ist. Darüberhinaus sollte der Balg - ebenso wie alle Verankerungsteile - aus rostfreiem Material, insbesondere aus Edelstahl bestehen, um selbst im Hinblick auf die bei einem Schiffsdiesel herrschenden Bedingungen eine lange Lebensdauer zu gewährleisten.

Im Rahmen der Erfindung ist es ferner vorteilhaft, daß die im wesentlichen parallel zum Leitungsabschnitt verlaufenden Hülsen der Rohrgelenke an ihren voneinander fortgerichteten Enden radial einbezogen und endständig mit dem zugeordneten Leitungsteil fest verbunden, vorzugweise verschweißt sind, wobei der Innendurchmesser wenigstens einer der Hülsen unter Berücksichtigung der erforderlichen Beweglichkeit des Gelenkes nur geringfügig größer als der Außendurchmesser des Balges zu sein braucht. Hiermit bilden also die Hülsen nach außen glatte und geschlossene Bauteile, die auf der anderen Seite im Sinne einer geringen Masse dünnwandig ausgebildet sein können, da sie als umlaufend geschlossenes Bauteil eine besonders hohe Stabilität haben.

In weiterer Ausbildung kann vorgesehen sein, daß die Klauen des Kardangelenkes durch einander diametral gegenüberliegende, abgegrundete Vorsprünge an den Enden der gleichgestalteten Hülsen gebildet sind, daß die Vorsprünge an den beiden Hülsenenden um 90° zueinander versetzt sind und mit axialem Abstand ineinandergreifen, und daß die Klauen durch die Gelenkbolzen mit einem die Gelenkstelle außen umfangenden Kardanring verbunden sind. Diese Bauform gibt dann die Möglichkeit, die Hülsen eines Kardangelenkes aus einem Rohrstück durch einen zur Bildung der Klauen in Umfangsrichtung und dabei axial hin- und hergehenden Trennvorgang gleichzeitig herzustellen, ohne daß bei dieser Fertigung Abfall entstehen kann oder für die Einzelteile gesonderte Trennvorgänge erforderlich wären.

Für die beiden auf dem gleichen Leitungsabschnitt angeordneten Kardangelenke empfiehlt es sich, daß die von ihren Gelenkbolzen gebildeten Ebenen parallel zueinander verlaufen, also die Rohrleitungsachsen im Bereich beider Gelenke fluchten, zumindest aber parallel sind.

Was das Einfachgelenk betrifft, so kann vorgesehen sein, daß der Innendurchmesser der anderen Hülse des Einfachgelenkes wenigstens im Bereich der Gelenkstelle größer als der Außendurchmesser der einen Hülse ist. Auch bei diesem Gelenk können die Hülsen einzeln vorstehende und aufeinander zu gerichtete Klauen aufweisen. Es besteht jedoch hier der Einfachheit halber die Möglichkeit, daß die Hülsen an ihrem gelenkseitigen Ende eine in einer Radialebene umlaufende Stirnkante aufweisen, und daß die Differenz zwischen Außendurchmesser der einen Hülse und Innendurchmesser der anderen Hülse der erforderlichen Gelenkbeweglichkeit des Einfachgelenkes entspricht.

Da beim Einfachgelenk die Gelenkbolzen nur durch das Material der Hülsen getragen sind, die ihrerseits möglichst dünnwandig ausgebildet sein sollen, kann es im Einzelfall zweckmäßig sein, daß die andere, also die außenliegende Hülse im Bereich der Gelenkstelle einen aufgesetzten Verstärkungsring aufweist.

Um beim Einfachgelenk die gegenseitige Lagerung der gelenkbildenden Hülsen möglichst reibungsfrei zu gestalten, kann es zweckmäßig sein, daß die Hülsen im Bereich der Gelenkstelle einen gegenseitigen radialen Abstand aufweisen, und daß der Abstand wenigstens an den zu den Gelenkbolzen um 90° versetzten Bereichen durch ein nach radial außen balliges Distanzstück ausgefüllt ist. Im gleichen Sinne kann es für die Kardangelenke zweckmäßig sein, daß der Kardanring die Gelenkstelle mit Abstand umfängt, und daß die Klauen einen den Abstand überbrückenden, nach radial außen balligen und von den Gelenkbolzen durchquerten Distanzring tragen.

Dabei können sowohl dieser Distanzring als auch die balligen Distanzstücke aus gleitfähigem Material, vorzugsweise Teflon bestehen. Gleichermaßen ist es zweckmäßig, daß die Gelenkbolzen Buchsen aus gleitfähigem Material, vorzugsweise Teflon für die auf ihnen drehbaren Teile tragen.

Weitere Merkmale und Einzelheiten ergeben sich aus der nachfolgenden Beschreibung einer Ausführungsform, die auf der Zeichnung dargestellt ist. In der Zeichnung zeigen:
- Figur 1: ein bewegliches Teilstück einer Kraftstoffleitung, teilweise im Axialschnitt;
- Figur 2: die Einzelheit II aus Figur 1 in vergrößertem Maßstab;
- Figur 3: eine Darstellung zur gleichzeitigen Herstellung zusammengehörender Gelenkhülsen und
- Figur 4: die Abwandlung einer Gelenkhülse des Einfachgelenkes.

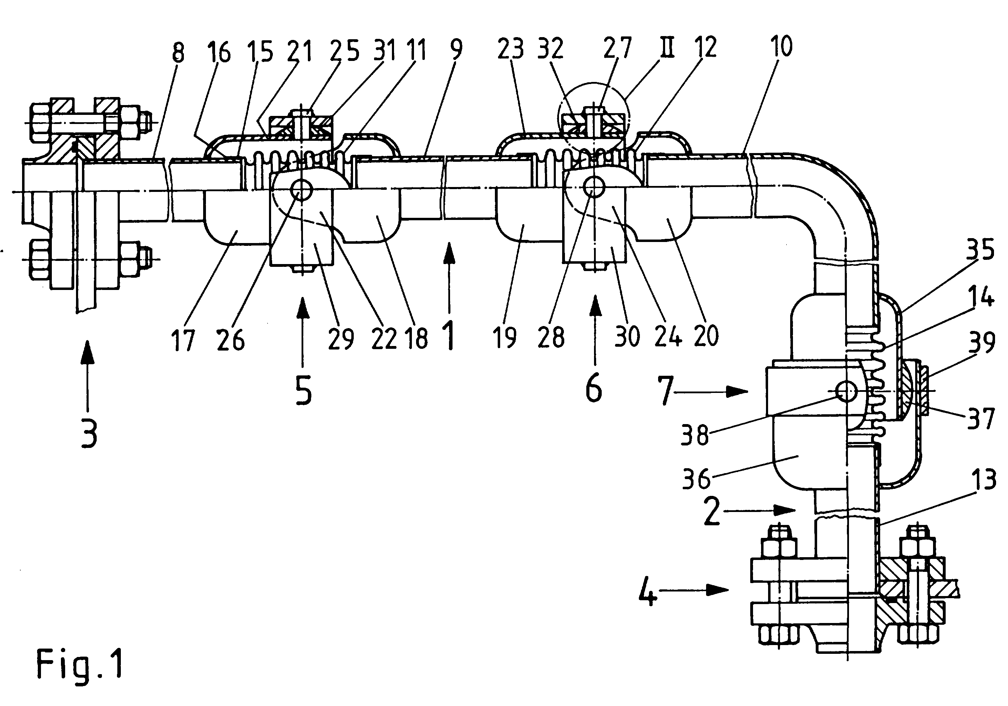

Figur 1 zeigt ein bewegliches Teilstück einer Kraftstoffleitung für Dieselmotoren, das aus einem Leitungsabschnitt 1 und einem daran rechtwinklig angeschlossenen Leitungsabschnitt 2 besteht. Die Gemeinsamkeit dieser Leitungsabschnitte 1 und 2 weist an ihren Enden Anschlußverbindungen 3, 4 auf, die als normale Flanschverbindungen ausgebildet sind und daher nicht im einzelnen erläutert werden. Von diesen Anschlußverbindungen 3, 4 ist eine als ortsfest anzusehen und beispielsweise über eine weitere, nicht dargestellte Leitung mit der Fördereinrichtung für den Dieselkraftstoff verbunden, während die andere Anschlußverbindung als beweglich anzusehen ist, weil sie mit der nicht dargestellten Kraftstoffzufuhr des Dieselmotors verbunden ist.

Damit die beiden Anschlußverbindungen 3, 4 aus den eingangs geschilderten Gründen - natürlich in Grenzen - allseits gegeneinander bewegt werden können, weist der Leitungsabschnitt 1 zwei im axialen Abstand voneinander angeordnete und miteinander fluchtende Kardangelenke 5, 6 auf, während im Leitungsabschnitt 2 ein Einfachgelenk 7 angeordnet ist.

Innerhalb dieser Gelenke sind die Leitungsteile 8, 9 und 10 des Leitungsabschnittes 1 durch ringgewellte Bälge 11, 12 miteinander verbunden, während innerhalb des Einfachgelenkes 7 die Leitungsteile 10, 13 durch einen ebenso ringgewellten Balg 14 miteinander verbunden sind.

Sämtliche beschriebenen und noch zu beschreibenden Teile bestehen aus Metall, um dem beweglichen Teilstück der Kraftstoffleitung Festigkeit gegen hohen Innendruck, insbesondere bei Druckschwankungen einerseits und Feuerfestigkeit andererseits zu verleihen.

Die Bälge 11, 12, 14 weisen gleichermaßen innerhalb des radialen Höhenbereiches ihrer Wellung gelegene, zylindrische Anschlußenden 15 (nur an einer Stelle mit dieser Bezeichnung veranschauchlicht) auf, mit denen sie durch eine außenliegende Überlappnaht 16 mit den jeweils angrenzenden Rohrteilen 8, 9, 10 und 13 dicht verbunden sind.

Die Wellung der Bälge 11, 12 und 14 ist andererseits so ausgeprägt, daß der Innendurchmesser der Bälge in etwa dem Innendurchmesser der Leitungsteile 8, 9, 10 und 13 entspricht. Die Höhe der Wellung ist so gering wie möglich gehalten, damit die Gelenke in Radialrichtung möglichst klein bauen können. Damit die Bälge trotzdem eine genügende Flexibilität aufweisen, sind sie aus dünnen Lagen mehrlagig aufgebaut und haben eine nicht zu geringe axiale Länge.

Bei den Kardangelenken 5, 6 sind die Bälge 11 bzw. 12 außen umgeben von zylindrischen Hülsen 17, 18 bzw. 19, 20, die mit diametral einander gegenüberliegenden, gegenseitig um 90° versetzten und axial beabstandeten Klauen 21, 22 bzw. 23, 24 ineinander greifen, wobei die Klauen über Gelenkbolzen 25, 26 bzw. 27, 28 mit einem die Hülsen umfangenden Kardanring 29 bzw. 30 drehbar verbunden sind.

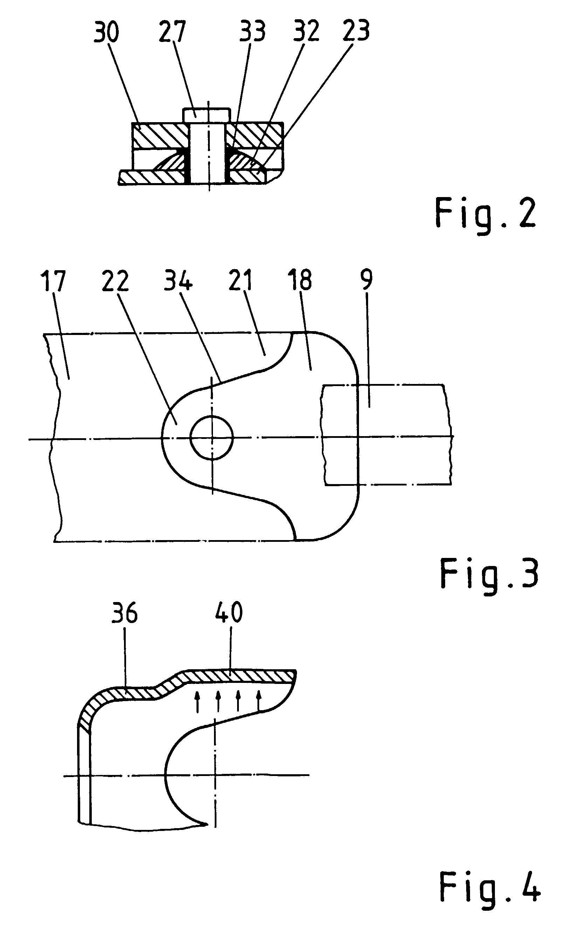

Der Kardanring 29 bzw. 30 hat gegenüber den Hülsen 17, 18 bzw. 19, 20 einen radialen Abstand, der von einem nach radial außen balligen und von den Gelenkbolzen 25, 26 bzw. 27, 28 durchquerten Distanzring 31, 32 ausgefüllt ist, der bei Herstellung aus gleitfähigem Material die leichte Beweglichkeit der Gelenke unterstützt. Wie insbesondere aus Figur 2 ersichtlich, sind die im Kardanring beispielsweise durch Schweißen festgelegten Gelenkbolzen im übrigen von einer Buchse 33 aus gleitfähigem Material umgeben, auf der sich die übrigen Teile entsprechend leicht drehen können.

Was das andere Ende der jeweiligen Hülsen 17, 18 bzw. 19, 20 betrifft, so ist dieses jeweils radial eingezogen und beispielsweise durch Schweißen auf den Leitungsteilen 8, 9, 10 außerhalb der Enden der Bälge 11 bzw. 12 befestigt.

Figur 3 zeigt in vereinfachter Weise, wie beispielsweise die Hülsen 17, 18 des Kardangelenkes 5 aus einem Rohrstück gleichzeitig hergestellt werden können. Dies geschieht dadurch, daß ein einziger Trennvorgang entlang der Linie 34 in Umfangsrichtung und dabei axial hin- und hergehend ausgeführt wird, wodurch die Klauen 21, 22 entstehen. Nunmehr müssen nur noch die den Klauen abgewandten Enden der Hülsen 17, 18 radial auf das Außenmaß der Leitungsteile beispielsweise 9, eingezogen und in den Klauen 21, 22 die Bohrungen für den Gelenkbolzen angebracht werden.

In verhältnismäßig geringfügiger Abwandlung weist das Einfachgelenk 7 rohrförmige Hülsen 35, 36 auf, wobei eine der Hülsen (36) einen Innendurchmesser hat, der mit Abstand größer als der Außendurchmesser der anderen Hülse (35) ist. Der so gebildete radiale Zwischenraum ist zur leichten Gelenkbeweglichkeit mit nach radial außen balligen Distanzstücken 37 aus Teflon ausgefüllt.

Die Hülsen 35, 36 sind an ihren voneinander fortgerichteten Enden wieder radial eingezogen und in der bereits beschriebenen Weise beispielsweise durch Schweißen auf den Leitungsteilen 10 bzw. 13 festgelegt.

Soweit sich die Hülsen gegenseitig überdecken, haben sie diametral einander gegenüberliegende Bohrungen zum Einsetzen von Gelenkbolzen 38, um deren Achse das Einfachgelenk 7 schwenkbar ist. Im übrigen weisen die Hülsen hier eine in einer Radialebene umlaufende Stirnkante auf.

Da das Material 35, 36 möglichst dünnwandig sein soll und aus Stabilitätsgründen auch sein kann, kann es jedoch zur Festlegung der Gelenkbolzen 38 beispielsweise durch Schweißen an einer der Hülsen (36) dort einer Materialverstärkung bedürfen, die im vorliegenden Falle durch einen auf der Hülse 36 aufgesetzten und dort durch Schweißen festgelegten Verstärkungsring 39 gegeben ist. Auf den Bolzen 38 sind im übrigen die Teile 35, 37 wieder über Teflonbuchsen entsprechend der Teflonbuchse 33 gemäß Figur 2 gelagert.

Wie aus der Zeichnung ersichtlich, haben die Hülsen 35, 36 in ihrem zylindrischen Teil einen unterschiedlichen Durchmesser. Ausgehend von im Durchmesser gleichem Rohrmaterial bei der Herstellung dieser beiden Hülsen kann entsprechend Figur 4 für die Hülse 36 jedoch auch vorgesehen sein, den im Gelenkbereich größeren Durchmesser dieser Hülse durch eine Aufweitung 40 des Rohrmaterials herzustellen.

## Patentansprüche

1. Rohrgelenk, insbesondere für ein bewegliches Teilstück aus Metall einer Kraftstoffleitung von Großdieselmotoren mit einem von einer ortsfesten Anschlussverbindung (3, 4) ausgehenden Leitungsabschnitt (1, 2) und einem daran anschließenden bis zu einer Verbindung (4, 3) am Motor weiterführenden Leitungsabschnitt (2, 1), wobei einer der Leitungsabschnitte (1, 2) mit axialem Abstand zueinander angeordnete Rohrgelenke in Form von Kardangelenken (5, 6) mit Klauen (21, 22, 23, 24) und der andere Leitungsabschnitt (2) mit dazu im wesentlichen querliegender Achse ein Rohrgelenk in Form eines Einfachgelenkes (7) mit Klauen aufweist, dessen Gelenkachse (38) im wesentlichen quer zu den Achsen der beiden Leitungsabschnitte (1, 2) angeordnet ist, wobei ferner innerhalb der Rohrgelenke (5, 6, 7) die Leitungsteile (8, 9, 10, 13) jeweils durch einen Metallbalg (11, 12, 14) dicht miteinander verbunden sind, und wobei die Klauen (21, 22, 23, 24) der Rohrgelenke (5, 6, 7) jeweils radial außerhalb des Balges (11, 12, 14) durch mit den Leitungsteilen (8, 9, 10, 13) verbundene rohrförmige Hülsen (17, 18, 19, 20, 35, 36) gebildet sind, deren aufeinander zu gerichtete Enden durch Gelenkbolzen (25, 26, 27, 28, 38) mit einem Kardanring (29,30) bzw. beim Einfachgelenk miteinander schwenkbar verbunden sind.

2. Rohrgelenk nach Anspruch 1,
dadurch gekennzeichnet,
daß die Leitungsabschnitte (1, 2) geradlinig verlaufend und rechtwinklig insbesondere über einen Krümmer aneinander anschließend ausgebildet sind.

3. Rohrgelenk nach Anspruch 1 oder 2,
dadurch gekennzeichnet,
daß der Innendurchmesser des Balges (11, 12, 14) im wesentlichen dem Innendurchmesser der angrenzenden Leitungsteile (8, 9, 10, 13) entspricht, daß die zylindrischen Anschlußenden (15) des Balges (11, 12, 14) innerhalb des Bereiches seiner Wellenhöhe nach radial außen gesetzt sind, und daß die Anschlußenden (15) auf der Außenseite der Leitungsteile (8, 9, 10, 13) mit diesen verbunden (16) sind.

4. Rohrgelenk nach einem oder mehreren der Ansprüche 1 bis 3,
dadurch gekennzeichnet,
daß der Balg (12, 14) mit geringer Höhe der Balgwellen bei im wesentlichen radial gerichteten Wellenflanken ausgebildet ist.

5. Rohrgelenk nach einem oder mehreren der Ansprüche 1 bis 4,
dadurch gekennzeichnet,
daß der Balg (11, 12, 14) ringgewellt ist.

6. Rohrgelenk nach einem oder mehreren der Ansprüche 1 bis 5,
dadurch gekennzeichnet,
daß die Balganschlußenden (15) und die Leitungsteile (8, 9, 10, 13) durch eine außenliegende Überlapptnaht (16) miteinander verschweißt sind.

7. Rohrgelenk nach einem oder mehreren der Ansprüche 1 bis 6,
dadurch gekennzeichnet,
daß der Balg (11, 12, 14) mehrlagig ausgebildet ist.

8. Rohrgelenk nach einem oder mehreren der Ansprüche 1 bis 7,
dadurch gekennzeichnet,
daß der Balg (11, 12, 14) aus Edelstahl besteht.

9. Rohrgelenk nach einem oder mehreren der Ansprüche 1 bis 8,
dadurch gekennzeichnet,
daß die im wesentlichen parallel zum Leitungsabschnitt (8, 9, 10, 13) verlaufenden Hülsen (17, 18, 19, 20, 35, 36) der Rohrgelenke (5, 6, 7) an ihren voneinander fortgerichteten Enden radial eingezogen und endständig mit dem zugeordneten Leitungsteil (8, 9, 10, 13) fest verbunden, vorzugsweise verschweißt sind.

10. Rohrgelenk nach einem oder mehreren der Ansprüche 1 bis 9,
dadurch gekennzeichnet,
daß der Innendurchmesser wenigstens einer der Hülsen (17, 18, 19, 20, 35) unter Berücksichtigung der erforderlichen Beweglichkeit des Gelenkes (5, 6, 7) nur geringfügig größer als der Außendurchmesser des Balges (11, 12, 14) ist.

11. Rohrgelenk nach einem oder mehreren der Ansprüche 1 bis 10,
dadurch gekennzeichnet,
dass die Klauen (21, 22, 24, 24) des Kardangelenkes (5, 6) durch einander diametral gegenüberliegende, abgerundete Vorsprünge an den Enden der gleichgestalteten Hülsen (17, 18, 19, 20) gebildet sind, dass die Vorsprünge an den beiden Hülsenenden um 90° Grad zueinander versetzt sind und mit axialem Abstand ineinandergreifen, und dass diese Klauen (21, 22, 23, 24) durch die Gelenkbolzen (25, 26, 27, 28) mit einem die Gelenkstelle außen umfangenden Kardanring (29, 30) verbunden sind.

12. Rohrgelenk nach Anspruch 11,
dadurch gekennzeichnet,
dass der Kardanring (29, 30) die Gelenkstelle mit Abstand umfängt, und dass die Klauen (21, 22, 23, 24) einen den Abstand überbrückenden, nach außen radial balligen und von den Gelenkbolzen (25, 26, 27, 28) durchquerten Distanzring (31, 32) tragen.

13. Rohrgelenk nach einem oder mehreren der Ansprüche 1 bis 12,
dadurch gekennzeichnet,
dass die Hülsen (17, 18, 19, 20) eines Kardangelenkes (5, 6) aus einem Rohrstück durch einen zur Bildung der Klauen (21, 22, 23, 24) in Umfangsrichtung und dabei axial hin- und hergehenden Trennvorgang (34) gleichzeitig hergestellt sind.

14. Rohrgelenk nach einem oder mehreren der Ansprüche 1 bis 13,
dadurch gekennzeichnet,
daß der Innendurchmesser der anderen Hülse (36) des Einfachgelenkes (7) wenigstens im Bereich der Gelenkstelle größer als der Außendurchmesser der einen Hülse (35) ist.

15. Rohrgelenk nach einem oder mehreren der Ansprüche 1 bis 14,
dadurch gekennzeichnet,
daß die Hülsen (35, 36) des Einfachgelenkes (7) an ihrem gelenkseitigen Ende eine in einer Radialebene umlaufende Stirnkante aufweisen, und daß die Differenz zwischen Außendurchmesser der einen Hülse (35) und Innendurchmesser der anderen Hülse (36) der erforderlichen Gelenkbeweglichkeit des Einfachgelenkes entspricht.

16. Rohrgelenk nach einem oder mehreren der Ansprüche 1 bis 15,
dadurch gekennzeichnet,
daß die Hülsen (35, 36) des Einfachgelenkes (7) im Bereich der Gelenkstelle einen gegenseitigen radialen Abstand aufweisen, und daß der Abstand wenigstens an den zu den Gelenkbolzen (38) um 90° versetzten Bereichen durch ein nach radial außen balliges Distanzstück (37) ausgefüllt ist.

17. Rohrgelenk nach einem oder mehreren der Ansprüche 1 bis 16,
dadurch gekennzeichnet, daß die andere Hülse (36) im Bereich der Gelenkstelle einen aufgesetzten Verstärkungsring (39) aufweist.

18. Rohrgelenk nach einem oder mehreren der Ansprüche 1 bis 17,
dadurch gekennzeichnet,
dass die Gelenkbolzen (25, 26, 27, 28, 38) Buchsen (33) aus gleitfähigem Material, vorzugsweise Teflon für die auf ihn drehbaren Teile tragen.

19. Rohrgelenk nach einem der Ansprüche 12 bzw. 16,
dadurch gekennzeichnet,
dass der Distanzring (31, 32) bzw. das Distanzstück (37) aus gleitfähigem Material, vorzugsweise Teflon besteht.

## Claims

1. Tube joint, in particular for a mobile metal sub-piece of a fuel line of large diesel engines, with a line section (1, 2) extending from a stationary connection (3, 4) and a line section (2, 1) adjoining the line section (1, 2) and continuing up to a connection (4, 3) at the engine, wherein one of the line sections (1, 2) comprises tube joints, which are disposed at an axial spacing from one another, in the form of universal joints (5, 6) with claws (21, 22, 23, 24), and the other line section (2), having an axis lying substantially transversely thereto, comprises a tube joint in the form of a simple joint (7) with claws whose joint axis (38) is disposed substantially transversely to the axes of the two line sections (1, 2), wherein, moreover, the line parts (8, 9, 10, 13) are in each case tightly connected together by a metal bellows (11, 12, 14) inside the tube joints (5, 6, 7), and wherein the claws (21, 22, 23, 24) of the tube joints (5, 6, 7) are in each case formed radially outside of the bellows (11, 12, 14) by tubular sleeves (17, 18, 19, 20, 35, 36) which are connected to the line parts (8, 9, 10, 13) and whose ends which are directed towards one another are connected to a gimbal (29, 30) or, in the case of a simple joint, pivotably connected together by joint pins (25, 26, 27, 28, 38).

2. Tube joint according to Claim 1,
characterised in that the line sections (1, 2) are formed so as to extend in rectilinear fashion and adjoin one another at a right angle, in particular via an elbow.

3. Tube joint according to Claim 1 or 2,
characterised in that the inside diameter of the bellows (11, 12, 14) corresponds substantially to the inside diameter of the adjacent line parts (8, 9, 10, 13), that the cylindrical connection ends (15) of the bellows (11, 12, 14) are positioned radially outwards inside the region of the corrugation height of the latter, and that the connection ends (15) are connected (16) to the line parts (8, 9, 10, 13) on the outside of the latter.

4. Tube joint according to one or more of Claims 1 to 3,
characterised in that the bellows (12, 14) are formed with a small bellows corrugation height with substantially radially directed corrugation flanks.

5. Tube joint according to one or more of Claims 1 to 4,
characterised in that the bellows (11, 12, 14) are corrugated in annular fashion.

6. Tube joint according to one or more of Claims 1 to 5,
characterised in that the bellows connection ends (15) and the line parts (8, 9, 10, 13) are welded together by an external lap seam (16).

7. Tube joint according to one or more of Claims 1 to 6,
characterised in that the bellows (11, 12, 14) are formed in multilayer fashion.

8. Tube joint according to one or more of Claims 1 to 7,
characterised in that the bellows (11, 12, 14) consist of special steel.

9. Tube joint according to one or more of Claims 1 to 8,
characterised in that the sleeves (17, 18, 19, 20, 35, 36), which extend substantially parallel to the line section (8, 9, 10, 13), of the tube joints (5, 6, 7) are radially reduced and firmly connected, preferably welded, to the associated line part (8, 9, 10, 13) at their ends which are directed away from one another.

10. Tube joint according to one or more of Claims 1 to 9,
characterised in that the inside diameter at least of one of the sleeves (17, 18, 19, 20, 35) is only slightly greater than the outside diameter of the bellows (11, 12, 14) with regard to the required mobility of the joint (5, 6, 7).

11. Tube joint according to one or more of Claims 1 to 10,
characterised in that the claws (21, 22, 23, 24) of the universal joint (5, 6) are formed by rounded projections, lying diametrically opposite one another, at the ends of the sleeves (17, 18, 19, 20), which are of a like form, that the projections at the two sleeve ends are staggered by 90° and intermesh at an axial spacing, and that these claws (21, 22, 23, 24) are connected by the joint pins (25, 26, 27, 28) to a gimbal (29, 30) externally embracing the joint.

12. Tube joint according to Claim 11,
characterised in that the gimbal (29, 30) embraces the joint at a spacing, and that the claws (21, 22, 23, 24) bear a distance ring (31, 32), which bridges the spacing, is cambered radially outwards and through which the joint pins (25, 26, 27, 28) pass.

13. Tube joint according to one or more of Claims 1 to 12,
characterised in that the sleeves (17, 18, 19, 20) of a universal joint (5, 6) are simultaneously made from a tube length by a parting operation (34) for forming the claws (21, 22, 23, 24) reciprocating in the circumferential direction and at the same time axially.

14. Tube joint according to one or more of Claims 1 to 13,
characterised in that the inside diameter of the other sleeve (36) of the simple joint (7) is greater than the outside diameter of one sleeve (35) at least in the region of the joint.

15. Tube joint according to one or more of Claims 1 to 14,
characterised in that the sleeves (35, 36) of the simple joint (7) comprise a front edge circulating in a radial plane at their end on the joint side, and that the difference between the outside diameter of one sleeve (35) and the inside diameter of the other sleeve (36) corresponds to the required articulated mobility of the simple joint.

16. Tube joint according to one or more of Claims 1 to 15,
characterised in that the sleeves (35, 36) of the simple joint (7) are at a radial spacing from one another in the region of the joint, and that the spacing is filled by a distance piece (37), which is cambered radially outwards, at least at the regions which are staggered by 90° with respect to the joint pins (38).

17. Tube joint according to one or more of Claims 1 to 16,
characterised in that the other sleeve (36) comprises a mounted reinforcing ring (39) in the region of the joint.

18. Tube joint according to one or more of Claims 1 to 17,
characterised in that the joint pins (25, 26, 27, 28, 38) bear bushes (33) of a material with sliding properties, preferably Teflon, for the parts which can rotate on them.

19. Tube joint according to Claim 12 or 16, characterised in that the distance ring (31, 32) or the distance piece (37) consists of a material with sliding properties, preferably Teflon.

## Revendications

1. Raccord articulé pour tuyaux, en particulier pour un tronçon métallique mobile d'une conduite de carburant pour gros moteurs diesels avec un segment de conduite (1, 2) partant d'un raccord de jonction fixe (3, 4) et un segment de conduite (2, 1) qui s'y raccorde et qui conduit jusqu'à un raccord (4, 3) au moteur, l'un des segments de conduite (1, 2) comportant ce faisant des raccords articulés pour tuyaux axialement espacés l'un de l'autre sous forme de joints de cardan (5, 6) avec des endentures (21, 22, 23, 24), et l'autre segment de conduite (2) comportant un raccord articulé disposé dans l'axe essentiellement transversal à celui-ci sous forme d'un raccord articulé simple (7) avec des endentures, dont l'axe d'articulation (38) est disposé essentiellement transversalement aux axes des deux segments de conduite (1, 2), les éléments de conduite (8, 9, 10, 13) étant par ailleurs à l'intérieur des raccords articulés pour tuyaux (5, 6, 7) respectivement reliés de façon étanche entre eux par un soufflet métallique (11, 12, 14), les endentures (21, 22, 23, 24) des raccords articulés pour tuyaux (5, 6, 7), respectivement radialement à l'extérieur du soufflet (11, 12, 14), étant ce faisant conçues par des manchons de type tuyaux (17, 18, 19, 20, 35, 36) reliés aux éléments de conduite (8, 9, 10, 13), dont les extrémités réciproquement opposées sont reliées de façon pivotante à un anneau de cardan (29,30) ou, selon les cas, s'il s'agit d'un raccord articulé simple entre elles, par des boulons articulés (25, 26, 27, 28, 38).

2. Raccord articulé pour tuyaux selon la revendication 1, caractérisé en ce que les segments de conduite (1, 2) sont conçus de façon à s'étendre en ligne droite et à angle droit, et en se raccordant mutuellement en particulier via un coude.

3. Raccord articulé pour tuyaux selon la revendication 1 ou 2, caractérisé en ce que le diamètre intérieur du soufflet (11, 12, 14) correspond pour l'essentiel au diamètre intérieur des éléments de conduite contigus (8, 9, 10, 13), en ce que les extrémités de raccordement cylindriques (15) du soufflet (11, 12, 14) sont disposées radialement vers l'extérieur à l'intérieur de la zone de sa hauteur d'ondulations, et en ce que les extrémités de raccordement (15) sont reliées (16) sur le côté extérieur des éléments de conduite (8, 9, 10, 13) à ceux-ci.

4. Raccord articulé pour tuyaux selon une ou plusieurs des revendications 1 à 3, caractérisé en ce que le soufflet (12, 14) est conçu avec une faible hauteur d'ondulations du soufflet avec des flancs d'ondulations orientés pour l'essentiel radialement.

5. Raccord articulé pour tuyaux selon une ou plusieurs des revendications 1 à 4, caractérisé en ce que le soufflet (11, 12, 14) présente des ondulations annulaires.

6. Raccord articulé pour tuyaux selon une ou plusieurs des revendications 1 à 5, caractérisé en ce que les extrémités de raccordement du soufflet (15) et les éléments de conduite (8, 9, 10, 13) sont soudés entre eux via une soudure par recouvrement placée à l'extérieur (16).

7. Raccord articulé pour tuyaux selon une ou plusieurs des revendications 1 à 6, caractérisé en ce que le soufflet (11, 12, 14) présente une structure multicouche.

8. Raccord articulé pour tuyaux selon une ou plusieurs des revendications 1 à 7, caractérisé en ce que le soufflet (11, 12, 14) est en acier spécial.

9. Raccord articulé pour tuyaux selon une ou plusieurs des revendications 1 à 8, caractérisé en ce que les manchons (17, 18, 19, 20, 35, 36) des raccords articulés pour tuyaux (5, 6, 7) s'étendant pour l'essentiel parallèlement au segment de conduite (8, 9, 10, 13) sont insérés radialement en leurs extrémités réciproquement opposées et sont reliés de façon fixe en leur extrémité à l'élément de conduite associé (8, 9, 10, 13), de préférence par soudage.

10. Raccord articulé pour tuyaux selon une ou plusieurs des revendications 1 à 9, caractérisé en ce que le diamètre intérieur d'au moins l'un des manchons (17, 18, 19, 20, 35), considérant la mobilité requise du raccord articulé (5, 6, 7), n'est que légèrement supérieur au diamètre extérieur du soufflet (11, 12, 14).

11. Raccord articulé pour tuyaux selon une ou plusieurs des revendications 1 à 10, caractérisé en ce que les endentures (21, 22, 23, 24) du joint de cardan (5, 6) sont conçues par des éléments faisant saillie, diamétralement opposés entre eux et arrondis, aux extrémités des manchons de conception identique (17, 18, 19, 20), en ce que les éléments faisant saillie sont décalés réciproquement aux deux extrémités du manchon de 90 ° et en ce que ceux-ci s'engagent l'un dans l'autre avec un espacement axial, et en ce que ces endentures (21, 22, 23, 24) sont reliées par les boulons articulés (25, 26, 27, 28) à un anneau de cardan (29, 30) entourant extérieurement le point d'articulation.

12. Raccord articulé pour tuyaux selon la revendication 11, caractérisé en ce que l'anneau de cardan (29, 30) entoure le point d'articulation avec un certain espacement, et en ce que les endentures (21, 22, 23, 24) supportent une bague d'écartement (31, 32) compensant l'espacement, bombée radialement vers l'extérieur et traversée par les boulons articulés (25, 26, 27, 28).

13. Raccord articulé pour tuyaux selon une ou plusieurs des revendications 1 à 12, caractérisé en ce que les manchons (17, 18, 19, 20) d'un joint de cardan (5, 6) sont simultanément fabriqués à partir d'un morceau de tuyau par une opération de tronçonnement (34) pour la formation des endentures (21, 22, 23, 24) dans la direction périphérique et ce faisant par un mouvement de va-et-vient axial.

14. Raccord articulé pour tuyaux selon une ou plusieurs des revendications 1 à 13, caractérisé en ce que le diamètre intérieur de l'un des manchons (36) du raccord articulé simple (7) est, au moins dans la zone du point d'articulation, supérieur au diamètre extérieur de l'autre manchon (35).

15. Raccord articulé pour tuyaux selon une ou plusieurs des revendications 1 à 14, caractérisé en ce que les manchons (35, 36) du raccord articulé simple (7) au niveau de leur extrémité côté raccord articulé comportent un bord frontal faisant le tour sur le plan radial, et en ce que la différence entre le diamètre extérieur de l'un des manchons (35) et le diamètre intérieur de l'autre manchon (36) correspond à la mobilité d'articulation requise du raccord articulé simple.

16. Raccord articulé pour tuyaux selon une ou plusieurs des revendications 1 à 15, caractérisé en ce que les manchons (35, 36) du raccord articulé simple (7) comportent dans la zone du point d'articulation un espacement radial réciproque, et en ce que l'espacement est compensé, au moins dans les zones décalées de 90 ° par rapport aux boulons articulés (38), par une pièce intercalaire bombée radialement vers l'extérieur (37).

17. Raccord articulé pour tuyaux selon une ou plusieurs des revendications 1 à 16, caractérisé en ce que l'autre manchon (36) comporte dans la zone du point d'articulation une bague de renfort rapportée (39).

18. Raccord articulé pour tuyaux selon une ou plusieurs des revendications 1 à 17, caractérisé en ce que les boulons articulés (25, 26, 27, 28, 38) supportent des douilles (33) fabriquées dans un matériau apte à glisser, de préférence dans du Téflon, pour les pièces pouvant pivoter sur celles-ci.

19. Raccord articulé pour tuyaux selon l'une des revendications 12 ou 16, caractérisé en ce que la bague d'écartement (31, 32) ou, selon les cas, la pièce intercalaire (37) est fabriquée dans un matériau apte à glisser, de préférence dans du Téflon.
